# FASCICULE DE BREVET EUROPEEN

(11) **EP 1 837 533 B1**
(45) Date de publication et mention de la délivrance du brevet: **06.06.2012**
(21) Numéro de dépôt: 07103865.7
(22) Date de dépôt: 09.03.2007
(51) Int. Cl.: F16C 7/04, F16C 27/06

(54) **Biellette de reprise de couple pourvue d'une articulation élastique**
Drehstab mit einem elastischen Gelenk
Torque rod provided with an elastic joint

(30) Priorité: 21.03.2006 FR 0602435
(43) Date de publication de la demande: 26.09.2007
(73) Titulaire: Cooper Standard France, 35000 Rennes (FR)
(72) Inventeur: Courteille, Eric, 35700 Rennes (FR); Mortier, Frédéric, 35380 Saint-Peran (FR); Gueno, Eric, 35132 Vezin Le Coquet (FR); Petrequin, Marc, 35850 Geveze (FR)
(74) Mandataire: Branger, Jean-Yves

(56) Documents cités:
- EP-A1- 0 894 659
- US-A- 2 925 972

## Description

La présente invention concerne une biellette de reprise de couple pourvue d'une articulation élastique.

Elle concerne, plus précisément, une biellette avec articulation élastique comprenant une armature extérieure rigide annulaire, à l'intérieur de laquelle est montée une armature intérieure rigide, ou noyau, traversé par un alésage destiné à recevoir un axe d'articulation, et dans laquelle au moins une masse en matériau souple et élastiquement déformable est interposée entre ces deux armatures afin d'autoriser un certain débattement relatif et un filtrage des vibrations,

Une telle articulation est adaptée en particulier, mais non exclusivement, pour équiper une biellette de liaison qui est destinée à être interposée, à des fins de limitation de débattement relatif et de filtrage des vibrations, entre deux éléments rigides au moyen d'axes de fixation.

Comme application privilégiée, quoique non limitative, une telle biellette peut faire office de biellette de reprise de couple (ou anti-couple) utilisée dans l'industrie automobile pour la suspension des moteurs.

Cette biellette peut servir notamment à la suspension des moteurs automobiles, et en particulier aux suspensions de type pendulaire, dans lesquelles les mouvements de rotation du groupe motopropulseur (GMP) suivant un axe parallèle, ou quasi-parallèle, à son vilebrequin sont limités par une ou plusieurs biellette(s) de reprise de couple, disposée(s) entre le moteur et la caisse du véhicule.

Une biellette anti-couple comprend traditionnellement deux articulations élastiques insérées dans une armature, le plus souvent métallique, constituant le corps de biellette.

L'une d'elles, de petite taille et à forte rigidité, joue un rôle de pivot.

La seconde articulation, de volume plus important et de rigidité plus faible que la première, couramment appelée « grosse articulation », a pour fonction la limitation progressive des débattements et le filtrage des vibrations entre le moteur et le châssis du véhicule.

Ces articulations sont généralement réalisées en matériau élastomère (caoutchouc naturel ou matière synthétique) adhérisé sur un noyau intérieur. Elles peuvent être soit emmanchées dans l'armature de biellette, directement ou via une armature extérieure elle-même adhérisée, soit directement adhérisées dans l'armature de biellette.

D'un point de vue fonctionnel, du fait de l'emploi exclusif d'élastomères pour les articulations élastiques, il est nécessaire de faire face à un compromis entre une faible raideur dynamique et un fort amortissement, souhaités respectivement pour le filtrage des excitations à moyennes et hautes fréquences d'une part, et l'amortissement des résonances à basses fréquences d'autre part, du GMP.

Les excitations à moyennes et hautes fréquences (à titre indicatif, supérieures à 25 Hz) sont essentiellement générées par les vibrations du moteur au cours de son fonctionnement normal.

Il s'agit donc d'un phénomène continu.

Les résonances à basses fréquences (à titre indicatif, inférieures à 20 Hz) apparaissent essentiellement de manière transitoire, en particulier lors des phases de démarrage et d'arrêt du moteur ou d'accélération et de décélération, dans un bouchon notamment.

L'emploi d'un élastomère de faible niveau d'amortissement, par exemple du caoutchouc naturel faiblement chargé, est le plus souvent retenu pour la grosse articulation.

Ainsi, on privilégie le confort acoustique et vibratoire du véhicule au détriment des prestations transitoires à savoir le démarrage et l'arrêt du véhicule ou du moteur par exemple, qui se font dans des conditions acoustiques et vibratoires moins confortables pour les occupants du véhicule.

Le document EP-A-0 894 659 divulgue une biellette conforme au préambule de la revendication 1. Le document US-A-2 925 972 se rapporte à une articulation élastique comportant un élément de contact flottant, destiné à produire un effet d'amortissement par alternance d'adhérence et de glissement.

L'invention a pour objectif de proposer une biellette pourvue d'une articulation élastique, qui soit capable d'assurer à la fois une filtration optimale des vibrations à hautes et moyennes fréquences et un amortissement convenable des fréquences de résonance à basse fréquence, ceci sans accroissements notables de la complexité de structure, de la masse, de l'encombrement, ni du coût de fabrication de la biellette.

La biellette selon l'invention, qui est pourvue d'une articulation élastique, comprend une armature extérieure rigide annulaire, à l'intérieur de laquelle est montée une armature intérieure rigide, ou noyau, traversé par un alésage destiné à recevoir un axe d'articulation, cette articulation comportant au moins une masse en matériau souple et élastiquement déformable qui est interposée entre ces deux armatures afin d'autoriser un certain débattement relatif et un filtrage des vibrations.

Conformément à l'invention, ladite articulation comporte au moins un élément de contact frottant -ou « frotteur »- disposé entre ce noyau et l'armature extérieure, et destiné à produire un effet d'amortissement par alternance d'adhérence et de glissement pour un déplacement relatif de ces deux éléments, autour d'une valeur seuil d'amplitude de ce déplacement, ce glissement se faisant en translation, suivant la direction longitudinale de la biellette, et perpendiculairement audit axe d'articulation.

Bien entendu, l'articulation est ainsi conformée qu'il existe entre les deux armatures un espace libre suffisant pour autoriser un tel glissement, dans un sens puis dans l'autre. L'espace situé à l'avant et à l'arrière du noyau (si on considère la direction longitudinale) n'est pas comblé -ou n'est pas intégralement comblé- par ladite masse en matériau souple, de sorte qu'un mouvement de va et vient relatif en translation axiale des deux armatures est possible.

Il convient de noter qu'une telle articulation, extrêmement compacte, peut être utilisée telle quelle ou montée à une extrémité d'une biellette, sans modification de la structure de cette biellette, contrairement à une solution proposée dans la demande de brevet française antérieure N° 05 08140 du 29 juillet 2005 (non encore publiée à la date de dépôt de la présente demande) qui préconise d'installer l'élément de contact frottant dans la partie centrale d'un corps de biellette, mais non de l'intégrer dans une articulation d'extrémité de la biellette.

Ce frotteur génère une raideur qui s'ajoute à celle de la masse en matériau souple de la grosse articulation, jusqu'à une certaine amplitude de déplacement relatif entre l'armature intérieure et le corps de biellette (déplacement seuil).

Cette raideur résulte de l'effort au cisaillement de la matière constitutive du frotteur.

Pour des amplitudes de déplacement supérieures à la valeur seuil, le frottement est déclenché, réalisant alors l'amortissement souhaité par dissipation d'énergie (frottements de Coulomb).

La valeur du déplacement seuil, qui déclenche le frottement, est choisie par réglage des raideurs relatives entre l'articulation et le frotteur, ainsi que par le coefficient de frottement (lié notamment à l'état de surface) et le niveau de précontrainte en compression de la matière constituant le frotteur.

Avantageusement, ledit élément de contact frottant comprend une masse souple pré-comprimée entre le noyau et l'armature extérieure de telle sorte que ladite valeur seuil soit atteinte pour un niveau d'effort de cisaillement donné.

Par ailleurs, selon un certain nombre de caractéristiques avantageuses, mais non limitatives, de l'invention :
- l'élément frottant est solidaire, par liaison mécanique ou adhésion, dudit noyau, et peut glisser contre la face interne de l'armature extérieure ;
- l'élément frottant est solidaire, par liaison mécanique ou adhésion, de ladite armature extérieure et peut glisser sur ledit noyau ;
- l'articulation présente une configuration symétrique par rapport à un plan longitudinal passant par l'axe dudit alésage, et possède au moins une paire d'éléments de contact frottants situés de chaque côté dudit noyau ;
- lesdits éléments de contact frottants assurent également la fonction de bras de cisaillement, sur une course en deçà de ladite valeur seuil de déplacement ;
- l'articulation comporte, associés auxdits éléments de contact frottants, des bras de cisaillement additionnels (distincts desdits éléments de contact frottants) ;
- l'articulation comporte des butées élastiquement déformables, aptes à limiter le déplacement relatif du noyau et de l'armature extérieure suivant une direction sensiblement parallèle audit plan précité et perpendiculaire à l'axe dudit alésage ;
- ledit élément de contact frottant est réalisé dans la même matière que la masse en matériau souple, par exemple en polyuréthane cellulaire, ces deux éléments étant moulés simultanément ;
- ledit élément de contact frottant est un élément rapporté, réalisé dans une matière différente de celle constituant la masse en matériau souple, cette matière étant par exemple du polyuréthane cellulaire ;
- ledit élément de contact frottant est constitué de deux parties en matière différente, à savoir une première partie en matériau souple et une deuxième partie en matériau rigide.

Une telle biellette peut être destinée, notamment, à assurer la suspension du groupe motopropulseur sur un véhicule automobile, en étant intercalée entre ce groupe motopropulseur et la caisse du véhicule.

D'autres caractéristiques et avantages de l'invention apparaîtront à la lecture de la description suivante de plusieurs modes de réalisation préférés de l'invention. Cette description est faite en référence aux dessins annexés dans lesquels :
- la figure 1 est une vue de dessus schématique d'un premier type de biellette, dont l'articulation possède des éléments de contact frottants qui assurent également la fonction de bras de cisaillement;
- les figures 1A et 1B sont des demi-vues partielles de la même biellette, montrant deux positions relatives différentes du noyau et de l'armature extérieure lors du fonctionnement du frotteur ;
- la figure 2 est une vue de dessus d'un premier mode de réalisation possible de l'articulation, coupée par le plan référencé II-II sur la figure 3, cette articulation correspondant à la « grosse articulation » d'une biellette du genre illustré sur la figure 1, partiellement représentée;
- la figure 3 est une vue en coupe de cette articulation, suivant le plan de coupe longitudinal référencé III-III sur la figure 2 ;
- la figure 4 est une vue en en coupe de cette articulation, suivant le plan de coupe longitudinal référencé IV-IV sur la figure 2 ;
- la figure 5 est une vue en perspective de la partie interne de l'articulation seule, extraite de l'armature extérieure ;
- la figure 6 est une vue de dessus d'un deuxième mode de réalisation possible de l'articulation, coupée par le plan référencé VI-VI sur la figure 7, cette articulation correspondant également à la « grosse articulation » d'une biellette du genre illustré sur la figure 1, partiellement représentée;
- la figure 7 est une vue en coupe de cette articulation, suivant le plan de coupe longitudinal référencé VII-VII sur la figure 6 ;
- la figure 8 est une vue en en coupe de cette articulation, suivant le plan de coupe longitudinal référencé VIII-VIII sur la figure 6 ;
- la figure 9 est une vue en perspective de la partie interne de l'articulation seule, extraite de l'armature extérieure ;
- la figure 10 est une vue de dessus d'un troisième mode de réalisation possible de l'articulation, coupée par le plan référencé X-X sur la figure 11;
- la figure 11 est une vue en coupe de cette articulation, suivant le plan de coupe longitudinal référencé XI-XI sur la figure 10 ;
- la figure 12 est une vue en perspective de la partie interne de l'articulation seule, extraite de l'armature extérieure ;
- la figure 13 est une vue de dessus schématique d'un second type de biellette, dont l'articulation possède des éléments de contact frottants associés à des bras de cisaillement distincts;
- les figures 13A, 13B et 13C sont des demi-vues partielles de la même biellette, montrant trois positions relatives différentes du noyau et de l'armature extérieure lors du fonctionnement du frotteur ;
- la figure 14 est une vue de côté, en coupe, d'un mode de réalisation possible de l'articulation, coupée par le plan référencé XIV-XIV sur la figure 15, cette articulation pouvant correspondre à la « grosse articulation » d'une biellette du genre illustré sur la figure 13;
- la figure 15 est une vue de dessus, en coupe, de cette articulation, vue suivant le plan de coupe longitudinal référencé XV-XV sur la figure 14 ;
- la figure 16 est une vue en perspective de la partie interne de l'articulation seule, extraite de son armature extérieure ;
- la figure 17 est une vue de côté similaire à la vue de la figure 14, qui représente une variante de cette articulation.

Sur les dessins, les différents organes constitutifs de la biellette et de l'articulation ont été affectés en général des mêmes chiffres de référence dès lors qu'ils remplissent la même fonction, même s'ils sont différents dans leur forme, sur les différentes versions illustrées.

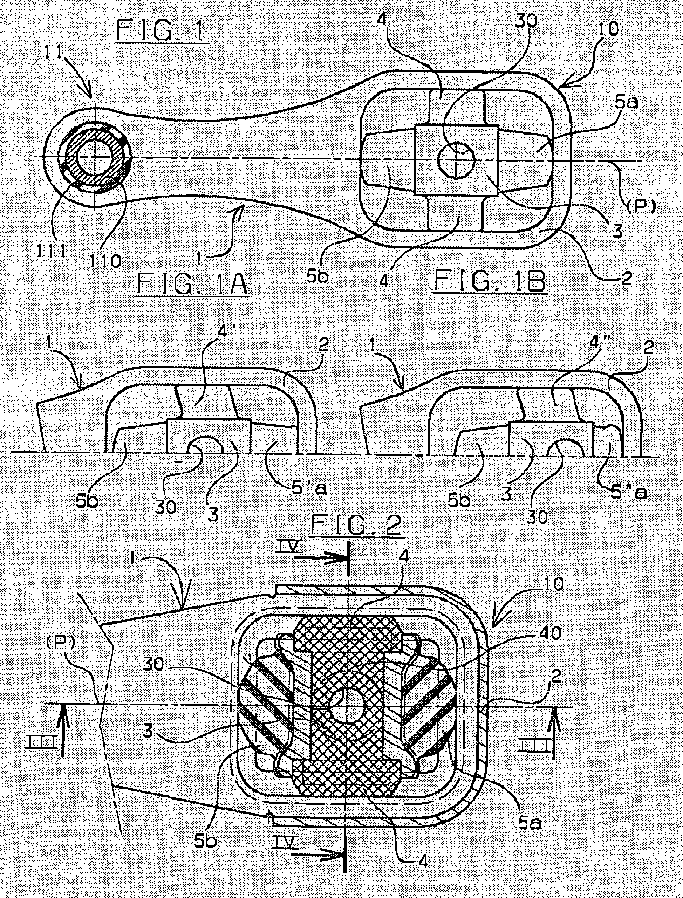

La biellette 1 représentée sur la figure 1 comprend une armature constitutive du corps de biellette proprement dit, réalisée en matériau rigide et pourvue à l'une de ses extrémités d'une « petite » articulation 11, et à l'autre extrémité d'une « grosse » articulation 10, selon une disposition bien connue. Le corps de la biellette peut être un corps massif, par exemple en aluminium extrudé ou moulé, ou être composé de deux flans en tôle découpée et emboutie, accolés et fixés l'un à l'autre par sertissage.

Le plan de symétrie longitudinal de la biellette est référencé **P.**

La petite articulation 11 est par exemple destinée à être fixée au groupe motopropulseur (GMP) d'un véhicule automobile, et la grosse articulation 10 à la caisse du véhicule, ceci à l'aide d'axes de fixation traversant une armature interne, ou noyau, 110, respectivement 3, de l'articulation.

Un montage inverse est néanmoins possible.

Le noyau 110 de la petite articulation est une bague métallique cylindrique dont le trou central sert au passage de cet axe (non représenté). L'extrémité correspondante de la bielle présente une paroi annulaire qui forme un manchon à l'intérieur duquel est montée coaxialement la bague 110. Une masse tubulaire en matériau élastique 111 est intercalée entre la bague 110 et le manchon, auxquels elle est fixée par adhérisation.

A l'autre extrémité du corps de biellette, sur la droite de la figure 1, le noyau 3 est un pavé métallique, par exemple en aluminium, de forme parallélépipédique rectangle, percé d'un alésage 30 servant au passage de l'axe de fixation.

Les grandes faces latérales de ce pavé sont parallèles au plan **P.**

On considérera conventionnellement que la biellette est disposée horizontalement, et que les axes de la bague 110 et du trou 30, parallèles entre eux, sont orientés verticalement.

Cette disposition, bien sûr, n'est nullement obligatoire.

La biellette a une configuration symétrique par rapport au plan longitudinal vertical médian **P.**

Au niveau de l'articulation 10, la paroi de l'armature extérieure 2 présente, vue de dessus, un contour fermé sensiblement rectangulaire, mais à angles arrondis, et le noyau 3 s'inscrit sensiblement au centre de ce rectangle, dont les grands côtés sont également parallèles au plan **P.**

Entre le noyau 3 et la paroi 2 sont interposées une paire de masses identiques, élastiquement déformables 4, en matière élastomère ; ces masses, par exemple en matériau élastomère ou polymère souple, de préférence en polyuréthane cellulaire, ont une forme parallélépipédique rectangle ; elles sont adhérisées de chaque côté du noyau 3, symétriquement par rapport au plan P.

Leur face externe est en contact frottant contre la face interne de l'armature 2. Ce contact se fait avec un certain de degré de serrage, car les masses 4 sont soumises à une précontrainte en compression.

Sur les faces avant et arrière du noyau 3 sont fixées, également par adhérisation, des tampons élastomères 5a, 5b formant butées de fin de course en translation axiale.

Ces butées maintiennent normalement le noyau 3 centré dans l'armature 2, dans une position neutre.

Lorsque la biellette 1 est interposée entre le GMP et la caisse d'un véhicule automobile, la petite articulation 11, dont la masse élastique 111 possède une grande raideur, a essentiellement pour fonction d'absorber les mouvements angulaires (pivotements), la masse 111 travaillant en torsion.

La grosse articulation 10, de volume plus important et de raideur plus faible, a pour fonction d'amortir les vibrations axiales, au moyen des bras 4 qui travaillent au cisaillement.

La figure 1A illustre un mouvement de translation d'amplitude modérée du noyau 3 par rapport à l'armature 2, dans un sens donné (vers la droite de la figure) en direction longitudinale par suite de l'apparition d'un effort axial suivant cette direction.

Les masses 4 -désignées 4'- sont soumises à un effort de cisaillement, de la même façon que des « bras » de cisaillement d'une articulation traditionnelle. Il n'y a pas de déplacement relatif entre leur face externe et la face interne de l'armature 2. La butée « avant » 5 a (désignée 5'a) est progressivement comprimée, tandis que la butée « arrière » 5b se décolle de l'armature 2. Le degré de cette adhérence peut être choisie à un niveau souhaité en jouant sur la nature de la matière ainsi que sur l'état de surface et le coefficient de frottement des parties en contact.

Si la sollicitation s'arrête en deçà d'une course déterminée, les bras 4' et la butée 5'a se déforment en sens inverse, recouvrant leur forme initiale, et ramenant le noyau 3 dans sa position neutre.

Si, au contraire, la sollicitation se poursuit au-delà d'une valeur seuil de déplacement, on observe un frottement à sec entre les faces externes des masses 4 (désignées 4 ") tandis que la butée avant 5"a se comprime encore plus.

Cette situation est illustrée sur la figure 1B.

Les mêmes phénomènes s'observent pour les déplacements en sens inverse, et ces modes de fonctionnement se poursuivent durant toute la phase d'excitation vibratoire de la biellette.

En référence aux figures 2 à 5, nous allons maintenant décrire le premier mode de réalisation de l'invention.

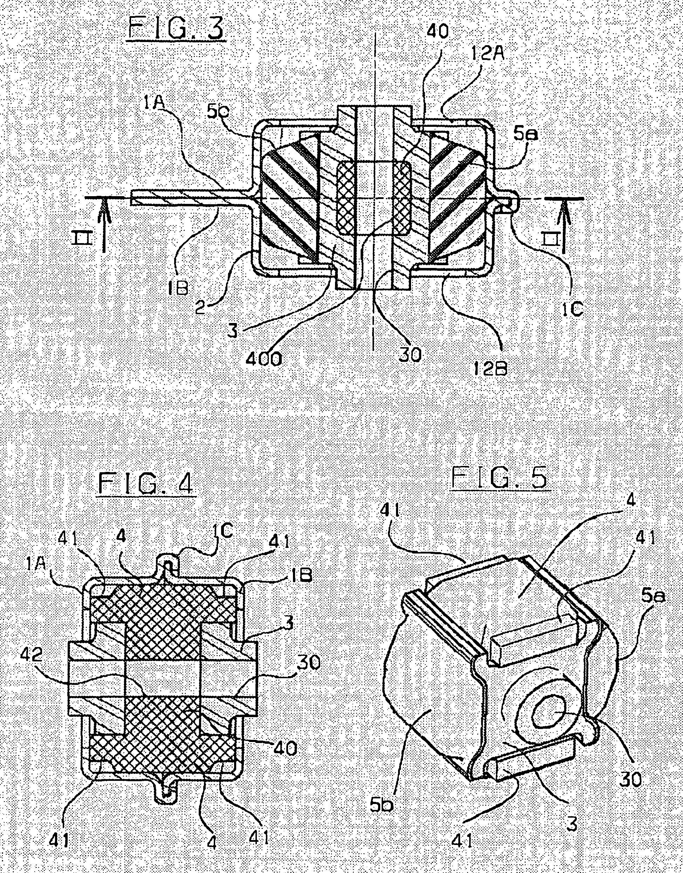

Les deux masses 4 constituent ici les deux portions d'extrémité élargies d'un bloc unique, par exemple en polyuréthane, dont la partie centrale 40 a une section rectangulaire de plus faibles dimensions, qui est fixée à l'intérieur d'un trou de section complémentaire, qui traverse le noyau 3, perpendiculairement au trou central 30 ; la partie 40 est elle-même percée d'un trou cylindrique 400 qui se trouve dans la continuité du trou 30 (voir figure 3).

Les faces externes planes des parties 4 sont bordées par des rives 41 surbaissées, qui les maintiennent centrées en direction longitudinale dans l'armature extérieure 2 de l'articulation. La bielle est composée de deux chapes en tôle 1A, 1B, serties l'une à l'autre par agrafage 1C, formant au niveau de l'articulation 10 une sorte de cage dans laquelle sont emprisonnés le noyau 3, le bloc 40-4, ainsi que les butées 5a et 5b. Ces dernières, par exemple en caoutchouc, ont une forme bombée et sont adhérisées à l'avant et à l'arrière du noyau 3.

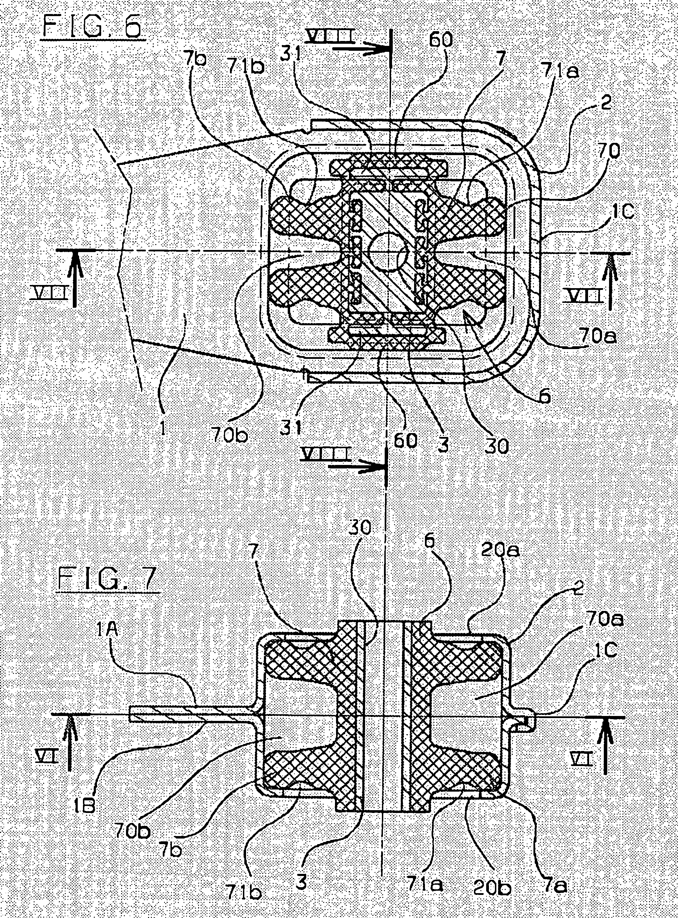

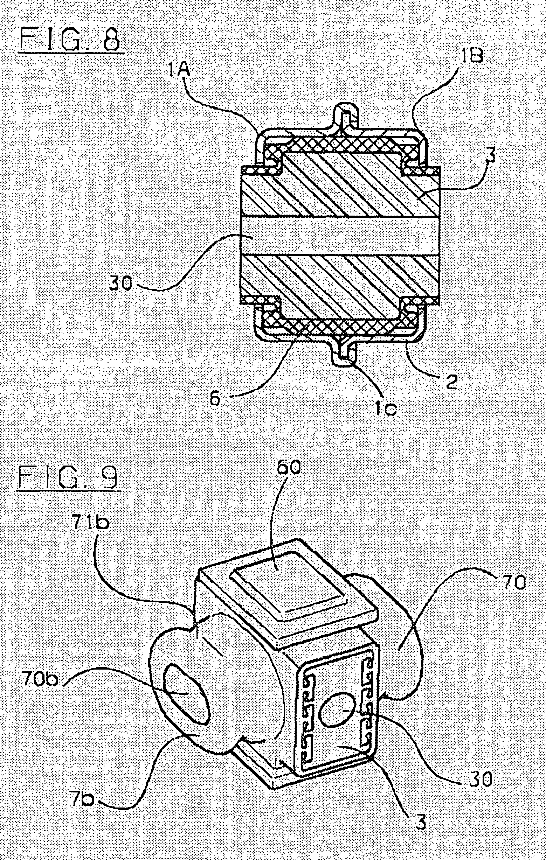

En référence aux figures 6 à 9, nous allons maintenant décrire le deuxième mode de réalisation de l'invention.

Le noyau 3 a la forme d'un parallélépipède rectangle. Ses grandes faces avant et arrière (voir figure 6) sont évidées par des rainures en « T » parallèles à l'axe du trou 30, c'est-à-dire verticales si on considère que la biellette est horizontale. Tout autour du noyau 3 est surmoulée une masse souple et élastique 6, par exemple en polyuréthane.

Les rainures précitées contribuent à son bon ancrage mécanique avec la paroi du noyau. La masse 6 fait à la fois office de tampons de butée 7 et d'éléments de contact frottant, matérialisés par des pavés latéraux 60 qui sont en appui contre la paroi de l'armature externe 2. Pour assurer la bonne retenue de ces pavés, les petites faces latérales du noyau 3 présentent, vues de dessus, un profil en « T » dont la branche transversale 31 est une plaquette enrobée à l'intérieur du pavé 60.

Les butées 7a, 7b sont des bourrelets qui, vus en bout, ont une forme ovale ; ils présentent un évidement central 70a, respectivement 70b, légèrement évasé vers l'extérieur ainsi qu'une gorge annulaire périphérique 71a, respectivement 71b. En jouant sur la forme et les dimensions de ces évidements et de ces gorges, on peut déterminer les caractéristiques des butées 7a, 7b pour ce qui est de leur résistance à l'écrasement, et optimiser la courbe qui représente leur course de compression en fonction de l'effort longitudinal qui leur est appliqué.

La masse 6 est conformée de manière à ce qu'elle soit « emprisonnée » convenablement, sans jeu, dans la cage définie par les deux flasques sertis 1A, 1 B, qui constitue l'armature extérieure 2 de l'articulation.

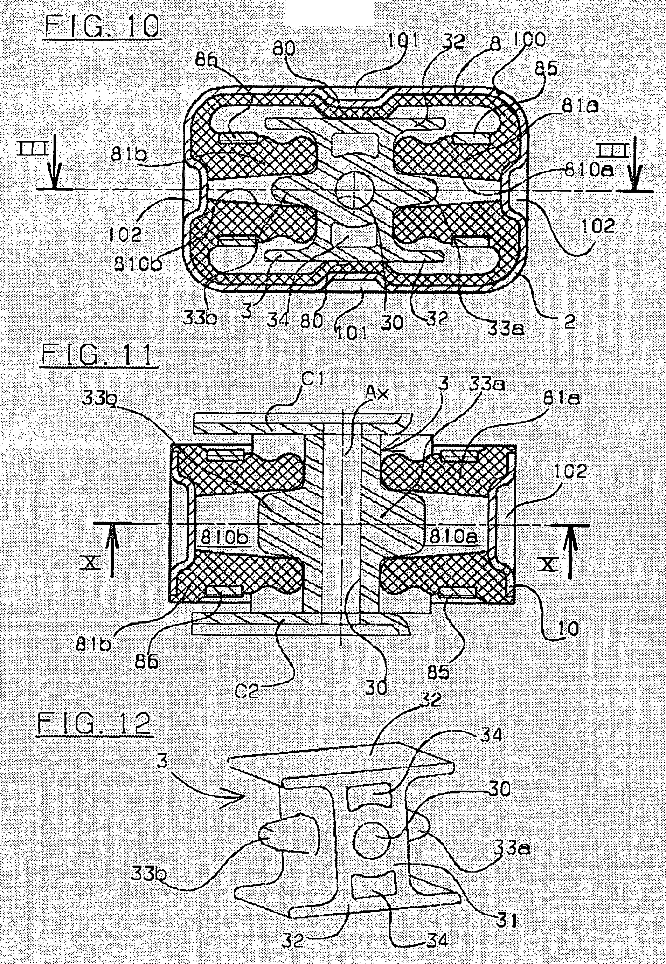

En référence aux figures 10 à 12, nous allons maintenant décrire le troisième mode de réalisation de l'invention.

Comme dans le mode de réalisation précédent, c'est une masse unique 8, par exemple en polyuréthane, qui constitue à la fois les éléments de contact frottants, référencés 80, et les tampons de butée avant et arrière, référencés respectivement 81a et 81b.

Une différence essentielle par rapport au mode de réalisation précédent est que la matière composant cette masse 8 est cette fois liée à l'armature extérieure 2, et non pas au noyau intérieur 3.

L'armature 2 est emboutie sur ses grandes faces latérales et ses petites faces avant et arrière de manière à constituer des bossages 101, respectivement 102, dirigés vers l'intérieur de l'articulation. Elles assurent une bonne retenue et un bon centrage, d'une part des pavés 80, d'autre part des butées 81a et 81b.

Le noyau 3, vu de dessus, a approximativement la forme d'un « I » dont les ailes 32 constituent des plateaux plans et lisses, venant en appui contre lesdits pavés 80. Sa branche centrale 31, outre le trou d'axe 30, présente des ouvertures d'allègement 34. Elle est munie de plots de centrage avant 33a et arrière 33b aptes à s'engager dans des cavités réceptrices, évasées vers l'intérieur, ménagées dans les éléments de butée avant 81a et 81b. Ces dernières sont cerclées par des anneaux rigides 85, respectivement 86, permettant de contrôler leur déformabilité et d'optimiser ainsi la courbe qui représente leur course de compression en fonction de l'effort longitudinal qui leur est appliqué.

Sur la figure 11 on a représenté l'axe d'articulation **Ax** qui traverse le trou 30, et qui est retenu par une paire de chapes **C1, C2.**

Cette articulation fonctionne de la même façon que celle expliquée plus haut, en référence aux figures 1, 1A et 1B, excepté qu'au-delà d'une course donnée, correspondant à la situation de la figure 1B, les frotteurs 4 (ici référencés 80) demeurent fixes par rapport à l'armature 2, et frottent à sec contre le noyau 3, en l'occurrence contre les plateaux 32. Il s'agit d'une simple inversion cinématique, qui ne modifie pas le fonctionnement du dispositif.

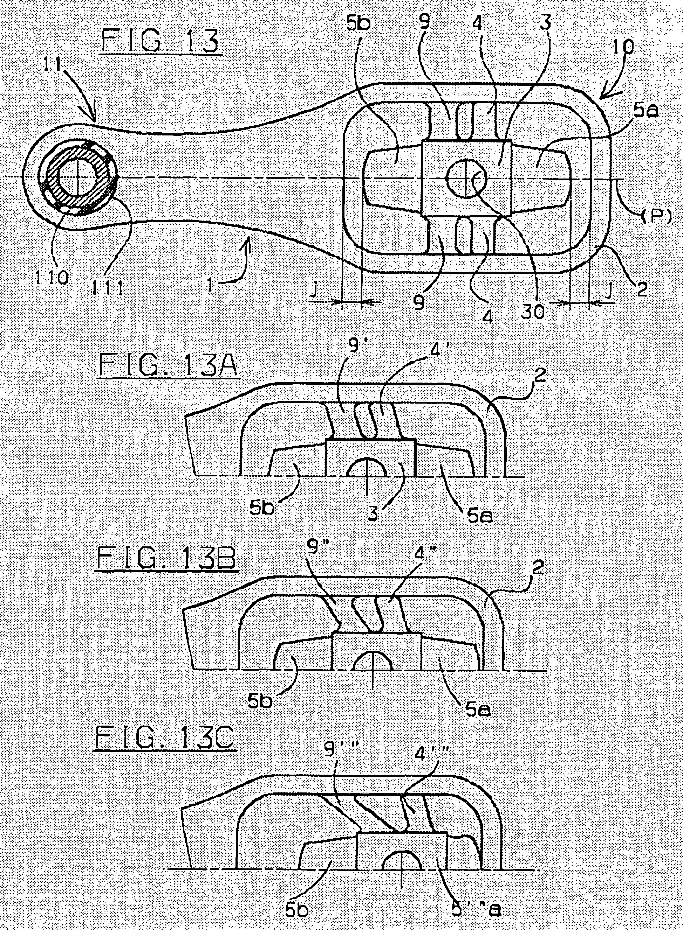

La biellette représentée sur la figure 13 se distingue de celle de la figure 1 par le fait qu'outre les deux masses 4, une paire de bras de cisaillement 9 sont intercalés entre le noyau 3 et l'armature 2 ; ils sont disposés de chaque côté du noyau 3, derrière un frotteur 4.

Les bras 9 sont des masses en matière souple et élastique, par exemple en caoutchouc ou en polyuréthane, qui sont adhérisés à la fois sur le noyau 3 et sur la face interne de l'armature 2.

Les matériaux constitutifs des masses 4 et 9 ne sont pas nécessairement de même nature et/ou ne présentent pas forcément des caractéristiques mécaniques identiques, notamment sur le plan leur déformabilité. Ils peuvent cependant être réalisés dans la même matière.

En position neutre, les butées 5a, 5b ne sont pas en contact avec l'armature 2, mais sont situées à une certaine distance j de celle-ci.

Ce sont les deux paires de bras souples et élastiques 4 et 9 qui maintiennent le noyau 3 convenablement centré.

La figure 13A illustre un mouvement de translation d'amplitude modérée du noyau 3 par rapport à l'armature 2, dans un sens donné (vers la droite de la figure) en direction longitudinale, par suite de l'apparition d'un effort axial suivant cette direction.

Les masses 4 -désignées 4'-, tout comme les « bras » additionnels 9 - désignés 9'- sont soumis à un effort de cisaillement, avec des raideurs qui s'ajoutent.

Il n'y a pas de déplacement relatif entre leur face externe et la face interne de l'armature 2.

Si la sollicitation s'arrête en deçà d'une course déterminée, les bras 4' et 9' se déforment en sens inverse, recouvrant leur forme initiale, et ramenant le noyau 3 dans sa position neutre.

Si, au contraire, la sollicitation se poursuit au-delà d'une valeur seuil de déplacement, on observe un frottement à sec entre les faces externes des masses 4 (désignées 4") tandis que les bras de cisaillement 9" se déforment encore plus.

Durant cette phase, qui est illustrée sur la figure 13B, la raideur des bras se combine avec le frottement des masses 4".

Au-delà d'une certaine amplitude, s'y ajoute également la résistance à l'écrasement de la butée avant 5"'a, qui vient prendre appui contre l'armature 2 tandis que les bras 9"' se déforment encore plus, et que les frotteurs 4"' poursuivent leur glissement.

Une fois la sollicitation terminée, l'articulation recouvre sa position initiale, tout d'abord par déformation élastique en sens inverse de la butée 5a, des bras 9 et des frotteurs 4, puis de la butée 5 et des bras 9, les frotteurs 4 glissant mais en sens inverse durant cette phase, et enfin des bras 9 seuls.

Les mêmes phénomènes s'observent pour les déplacements en sens inverse, et ces modes de fonctionnement se poursuivent durant toute la phase d'excitation vibratoire de la biellette.

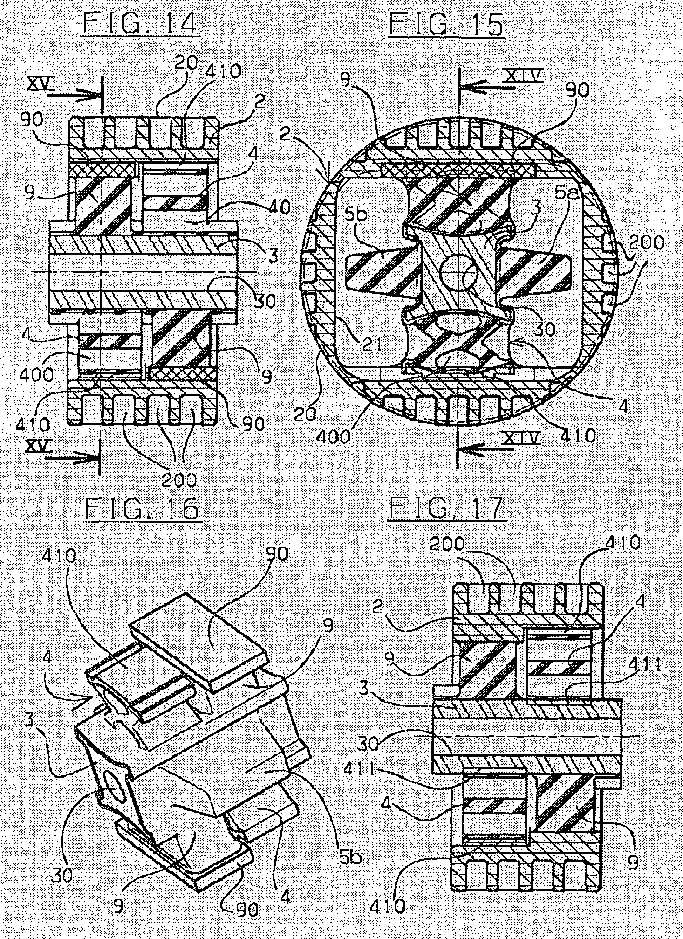

Les figures 14 à 16 montrent une articulation qui fonctionne de la façon qui vient d'être expliquée.

Elle comporte un corps creux 2 qui fait office d'armature extérieure, dont la paroi externe a une forme généralement cylindrique 20, mais est creusée de rainures d'allègement 200. Cette paroi est adaptée pour s'emmancher dans une ouverture cylindrique réceptrice prévue à une extrémité de la biellette (non représentée). Le corps 2 est rigide et mécaniquement très résistant, réalisé par exemple en aluminium ou en matériau polymère thermoplastique ; il présente une large ouverture centrale 21 de forme rectangulaire, à angles arrondis.

Le noyau 3 consiste en un barreau de section approximativement carrée, percé axialement du trou 30 recevant l'axe d'articulation.

Deux faces opposées du noyau, correspondant à ses faces avant et arrière, sont planes ; ses deux autres faces opposées, correspondant à ses faces latérales, sont légèrement concaves (en arc de cylindre). Elles débordent légèrement vers l'extérieur par rapport aux faces avant et arrière, qui se trouvent par conséquent légèrement renfoncées.

Tout autour de ce noyau, excepté au niveau des faces d'extrémité « en bout » du barreau est surmoulée une masse en matériau souple et élastique.

Celle-ci comprend, au niveau des faces planes avant et arrière du noyau, une paire d'éléments en saillie 5a, 5b faisant office de butées et, au niveau des faces latérales concaves, d'une part, une paire d'éléments 4 constituant les frotteurs et, d'autre part, une paire d'éléments 9 constituant les bras de cisaillement.

Ceux-ci sont disposées de manière alternée, l'élément 4 étant disposé devant l'élément 9 sur l'une des faces latérales du noyau 3, tandis qu'inversement, sur la face opposée, l'élément 4 étant disposé derrière l'élément 9.

Les bras de cisaillement 9 sont adhérisés intérieurement sur le noyau 3 et extérieurement sur une plaquette rigide 90, par exemple en matière plastique, qui est fixée, par exemple par emboîtement et/ou collage contre la face interne de l'armature 2.

Les éléments 4 présentent des cavités internes 400 qui accroissent leur souplesse ; ils sont adhérisés intérieurement sur le noyau 3 et extérieurement sur un patin de frottement 410, par exemple en matériau rigide (matière plastique ou polyuréthane compact, par exemple).

Ce sont les patins 410 qui vont frotter contre la paroi de l'armature 2 au cours du fonctionnement de l'articulation tel qu'il a été décrit plus haut.

Sur la variante de la figure 17, les bras de cisaillement 9 sont adhérisés non seulement intérieurement sur le noyau 3, mais aussi (directement) extérieurement contre la face interne de l'armature 2.

Les éléments 4 sont adhérisés extérieurement sur un patin de frottement 410, et intérieurement sur une plaquette intermédiaire rigide 411, elle même fixée au noyau 3, par exemple par emboîtement et/ou collage.

## Revendications

1. Biellette de reprise de couple, qui est pourvue, à l'une de ses extrémités, d'une articulation élastique, comprenant une armature extérieure rigide annulaire (2), à l'intérieur de laquelle est montée une armature intérieure rigide, ou noyau (3), traversé par un alésage (30) destiné à recevoir un axe d'articulation, dans laquelle au moins une masse en matériau souple et élastiquement déformable est interposée entre ces deux armatures (2, 3) afin d'autoriser un certain débattement relatif et un filtrage des vibrations, **caractérisé par le fait que** ladite articulation comporte au moins un élément de contact frottant (4 ; 60 ; 80 ; 410) disposé entre le noyau (3) et l'armature extérieure (2), et destiné à produire un effet d'amortissement par alternance d'adhérence et de glissement pour un déplacement relatif de ces deux éléments (2, 3), autour d'une valeur seuil d'amplitude de ce déplacement, ce glissement se faisant en translation suivant la direction longitudinale de la biellette, perpendiculairement audit axe d'articulation.

2. Biellette selon la revendication 1, **caractérisée par le fait que** ledit élément de contact frottant (4; 60 ; 80; 410) comprend une masse souple pré-comprimée entre le noyau (3) et l'armature extérieure (2) de telle sorte que ladite valeur seuil soit atteinte pour un niveau d'effort de cisaillement donné.

3. Biellette selon la revendication 1 ou 2, **caractérisée par le fait que** l'élément frottant (4 ; 60 ; 410) est solidaire, par liaison mécanique ou adhésion, dudit noyau (3), et peut glisser contre la face interne de l'armature extérieure (2).

4. Biellette selon la revendication 1 ou 2, **caractérisée par le fait que** l'élément frottant (80) est solidaire, par liaison mécanique ou adhésion, de ladite armature extérieure (2) et peut glisser sur ledit noyau (3).

5. Biellette selon l'une des revendications précédentes, **caractérisée par le fait qu'**elle présente une configuration symétrique par rapport à un plan (P), dit longitudinal, passant par l'axe dudit alésage (30), et qu'elle possède au moins une paire d'éléments de contact frottants (4 ; 60 ; 80 ; 410) situés de chaque côté dudit noyau (3).

6. Biellette selon la revendication 5, **caractérisée par le fait que** lesdits éléments de contact frottants (4 ; 60 ; 80) assurent également la fonction de bras de cisaillement, sur une course en deçà de ladite valeur seuil de déplacement.

7. Biellette selon la revendication 5, **caractérisée par le fait qu'**elle comporte, associés auxdits éléments de contact frottants (410), des bras de cisaillement additionnels (9).

8. Biellette selon l'une des revendications 5 à 7, **caractérisée par le fait qu'**elle comporte des butées (5a, 5b; 7a, 7b ; 81a, 81b) élastiquement déformables, aptes à limiter le déplacement relatif du noyau (3) et de l'armature extérieure (2) suivant une direction sensiblement parallèle audit plan (P) et perpendiculaire à l'axe dudit alésage (30).

9. Biellette selon la revendication 1, **caractérisée par le fait que** ledit élément de contact frottant est réalisé dans la même matière que la masse en matériau souple, par exemple en polyuréthane cellulaire, ces deux éléments étant moulés simultanément.

10. Biellette selon la revendication 1, **caractérisée par le fait que** ledit élément de contact frottant est un élément rapporté, réalisé dans une matière différente de celle constituant la masse en matériau souple, cette matière étant par exemple du polyuréthane cellulaire.

11. Biellette selon la revendication 1, **caractérisée par le fait que** ledit élément de contact frottant est constitué de deux parties en matière différente, à savoir une première partie en matériau souple et une deuxième partie en matériau rigide.

12. Biellette (1) selon l'une des revendications précédentes, **caractérisée par le fait qu'**elle est destinée à assurer la suspension du groupe motopropulseur sur un véhicule automobile, en étant intercalée entre ce groupe motopropulseur et la caisse du véhicule.

## Claims

1. Torque rod, equipped, at one of its ends, with an elastic joint, including an external rigid annular armature (2), inside of which an internal rigid armature, or core (3), is mounted, through which a bore (30) intended to receive a pivot pin passes, in which at least one mass of flexible and elastically deformable material is inserted between said two armatures (2, 3) so as to allow a certain relative displacement and vibration filtering, **characterized in that** said joint comprises at least one frictional contact element (4; 60; 80; 410) arranged between the core (3) and the external armature (2), and intended to produce a damping effect by alternation of adhesion and sliding for a relative displacement of said two elements (2, 3), around an amplitude threshold value for said displacement, in which said sliding occurs in translation in the longitudinal direction of the rod, perpendicularly to said pivot pin.

2. Torque rod according to claim 1, **characterized in that** said frictional contact element (4; 60; 80; 410) includes a pre-stressed flexible mass between the core (3) and the external armature (2) so that said threshold value is reached for a given shear force.

3. Torque rod according to claim 1 or 2, **characterized in that** the frictional element (4; 60; 410) is secured, by a mechanical bond or adhesion, to said core (3), and can slide against the internal face of the external armature (2).

4. Torque rod according to claim 1 or 2, **characterized in that** the frictional element (80) is secured, by a mechanical bond or adhesion, to said external armature (2) and can slide over said core (3).

5. Torque rod according to one of the previous claims, **characterized in that** it has a symmetrical configuration with respect to a so-called longitudinal plane (P) passing through the axis of said bore (30), and **in that** it has at least one pair of frictional contact elements (4; 60; 80; 410) located on each side of said core (3).

6. Torque rod according to claim 5, **characterized in that** said frictional contact elements (4; 60; 80) also function as shearing arms, over a stroke length inferior to said displacement threshold value.

7. Torque rod according to claim 5, **characterized in that** it comprises, in association with said frictional contact elements (410), additional shearing arms (9).

8. Torque rod according to one of claims 5 to 7, **characterized in that** it comprises elastically deformable stops (5a, 5b; 7a, 7b; 81a, 81b), capable of limiting the relative displacement of the core (3) and the external armature (2) in a direction substantially parallel to said plane (P) and perpendicular to the axis of said bore (30).

9. Torque rod according to claim 1, **characterized in that** said frictional contact element is made of the same material as the flexible material mass, for example cellular polyurethane, and said two elements are moulded simultaneously.

10. Torque rod according to claim 1, **characterized in that** said frictional contact elements is an attached element, made of a material different from that forming the flexible material mass, which material is, for example, cellular polyurethane.

11. Torque rod according to claim 1, **characterized in that** said frictional contact element consists of two portions made of different materials, namely a first portion made of a flexible material and a second portion made of a rigid material.

12. Torque rod (1) according to one of the previous claims, **characterized in that** it is intended to ensure the suspension of the drive train on a motor vehicle, by being inserted between said drive train and the vehicle body.

## Patentansprüche

1. Drehmomentanlauf-Schwingarm, der an einem seiner Enden mit einem elastischen Gelenk versehen ist, umfassend eine ringförmige starre Außenarmierung (2), in deren Innern eine starre Innenarmierung montiert ist bzw. ein Kern (3), der von einer Bohrung (30) durchsetzt ist, die für die Aufnahme einer Gelenkachse bestimmt ist, wobei zumindest eine Masse aus weichem und elastisch verformbarem Material zwischen diesen beiden Armierungen (2, 3) angeordnet ist, um einen gewissen relativen Federweg und eine Filterung der Schwingungen zu ermöglichen, **dadurch gekennzeichnet, dass** das Gelenk zumindest ein Gleitkontaktelement (4; 60; 80; 410) aufweist, das zwischen dem Kern (3) und der Außenarmierung (2) angeordnet ist und dafür vorgesehen ist, eine Dämpfungswirkung durch abwechselndes Haften und Gleiten bei einer relativen Verschiebung dieser beiden Elemente (2, 3) um einen Schwellenwert der Amplitude dieser Verschiebung zu erzeugen, wobei dieses Gleiten durch Translationsbewegung entlang der Längsachse des Schwingarms, senkrecht zu der Gelenkachse, erfolgt.

2. Schwingarm nach Anspruch 1, **dadurch gekennzeichnet, dass** das Gleitkontaktelement (4; 60; 80; 410) eine weiche Masse umfasst, die zwischen dem Kern (3) und der Außenarmierung (2) vorgepresst ist, derart, dass der Schwellenwert bei einem gegebenen Scherkraftniveau erreicht wird.

3. Schwingarm nach Anspruch 1 oder 2, **dadurch gekennzeichnet, dass** das Gleitelement (4; 60; 410) durch mechanische Verbindung oder Haftung mit dem Kern (3) fest verbunden ist und gegen die innere Fläche der Außenarmierung (2) gleiten kann.

4. Schwingarm nach Anspruch 1 oder 2, **dadurch gekennzeichnet, dass** das Gleitelement (80) durch mechanische Verbindung oder Haftung mit der Außenarmierung (2) fest verbunden ist und auf dem Kern (3) gleiten kann.

5. Schwingarm nach einem der vorhergehenden Ansprüche, **dadurch gekennzeichnet, dass** sie eine zu einer Ebene (P), der so genannten Längsebene, die durch die Achse der Bohrung (30) verläuft, symmetrische Ausgestaltung aufweist, und dass sie zumindest ein Paar von Gleitkontaktelementen (4; 60; 80; 410) aufweist, die beiderseits des Kerns (3) angeordnet sind.

6. Schwingarm nach Anspruch 5, **dadurch gekennzeichnet, dass** die Gleitkontaktelemente (4; 60; 80) auf einem Weg unterhalb des Schwellenwerts auch die Funktion von Scherarmen erfüllen.

7. Schwingarm nach Anspruch 5, **dadurch gekennzeichnet, dass** sie zusätzliche Scherarme (9) aufweist, die den Gleitkontaktelementen (410) zugeordnet sind.

8. Schwingarm nach einem der Ansprüche 5 bis 7, **dadurch gekennzeichnet, dass** sie elastisch verformbare Anschläge (5a, 5b; 7a, 7b; 81a, 81b) aufweist, die dazu geeignet sind, die relative Verschiebung des Kerns (3) und der Außenarmierung (2) in einer Richtung zu begrenzen, die im Wesentlichen parallel zu der Ebene (P) und senkrecht zu der Achse der Bohrung (30) ist.

9. Schwingarm nach Anspruch 1, **dadurch gekennzeichnet, dass** das Gleitkontaktelement aus demselben Material wie die Masse aus weichem Material, zum Beispiel aus zellulärem Polyurethan, gebildet ist, wobei diese beiden Elemente gleichzeitig geformt sind.

10. Schwingarm nach Anspruch 1, **dadurch gekennzeichnet, dass** das Gleitkontaktelement ein Einsatz ist, der aus einem Material gebildet ist, das sich von dem, aus dem die Masse aus weichem Material gebildet ist, unterscheidet, wobei dieses Material zum Beispiel zelluläres Polyurethan ist.

11. Schwingarm nach Anspruch 1, **dadurch gekennzeichnet, dass** das Gleitkontaktelement aus zwei Teilen aus unterschiedlichem Material gebildet ist, nämlich einem ersten Teil aus weichem Material und einem zweiten Teil aus starrem Material.

12. Schwingarm (1) nach einem der vorhergehenden Ansprüche, **dadurch gekennzeichnet, dass** sie dafür bestimmt ist, die Aufhängung des Antriebsstrangs bei einem Kraftfahrzeug sicherzustellen, indem sie zwischen diesem Antriebsstrang und der Karosserie des Fahrzeugs angeordnet ist.
